# EUROPEAN PATENT APPLICATION

(11) **EP 1 531 622 A1**
(43) Date of publication of application: **18.05.2005**
(21) Application number: 04300790.5
(22) Date of filing: 15.11.2004
(51) Int. Cl.: H04N 5/445

(54) **Universal history menu**

(30) Priority: 17.11.2003 US 715074
(71) Applicant: ALCATEL, 75008 Paris (FR)
(72) Inventor: Beaton, Robert J., E5P 3G2, APOHAQUI, New Brunswick (CA); Radzikowska, Milena, Edmonton, Alberta T6G 019 (CA); Hetherington, Robert Gary, E2E 1W6, ROTHESAY, New Brunswick (CA); Lenwood Stuart, Anthony Moyle, E2L 1G1, SAINT JOHN, New Brunswick (CA); McDougall Palmer, Samuel John Allan, E2L 4R8, SAINT JOHN, New Brunswick (CA); Clowater, Gerald Allan, E2J 4J5, SAINT JOHN, New Brunswick (CA)
(74) Representative: Feray, Valérie

(57) **Abstract**

Methods, interfaces, and devices for navigating locations previously accessed by an end user device such as a set top box. A history menu with menu items is provided with the menu items referencing the last locations accessed by the end user device. The end user can therefore choose any one of the previously accessed locations and, upon activation of the menu items, the location referenced by the menu item is accessed. Each location accessed by the end user device creates or modifies a record that notes details relating to how that location is accessed. The mode of the end user device, the address or channel for the location, and any related or required software is noted in the record along with a short but useful description of the location. Each record is referenced by one of the menu items and, upon activation of the menu item, the record is retrieved. The end user device then uses the details in the record the record is retrieved. The end user device then uses the details in the record to access the desired location.

## Description

### Field of the Invention

The present invention relates to user interfaces and more specifically, is especially but not limited to methods and interfaces for use in navigating locations previously accessed by an end user device for receiving multimedia content.

### Background to the Invention

The increasing number of services available through television sets to end users has led to a related increase in end user frustration. The set top boxes (STBs) through which end users receive these services need to switch modes to be able to access the differing services. Trying to navigate the different modes of the STB to receive a specific service can be a trying ordeal for end users, especially those who do not have an aptitude for technology.

One specific task that end users often perform while watching television is switching or toggling between different channels. This activity has been helped enormously by the provision of a "Last Channel" or "Previous Channel" option on most remote controls for television sets and set top boxes. This option merely switches channels to the most recent previous channel to which the television or STB was tuned. Unfortunately, this feature is not available for the new services available through STBs. As such, if an end user is accessing the Internet through the STB and he or she needs to just quickly check a television program currently being broadcast, he or she must first switch the mode the STB is in, find the relevant channel, and tune into that channel. Such an involved process easily gets much more complicated if the end user needs to monitor multiple channels, an Internet website, and send an email, all through a single STB.

Another concern that end users have is their inability to revisit the most recent locations they have accessed. This can be problematic even if only the TV mode is used. An end user wishing to monitor three or more simultaneous locations across different modes must be fairly sophisticated and quick on the remote control to do a proper job of monitoring. Such remote control acrobatics that result are not for the average end user. As noted above, current technology merely allows the end user to toggle between two channels - a current channel and a previous channel.

Based on the above, there is therefore a need for a solution that enhances an end user's television viewing experience by allowing him to seamlessly switch and/or toggle between the different modes of their STBs. Such a solution should, ideally, provide the end user with the ability not just to revisit more than one previous television channel but also to revisit other locations recently accessed regardless of the type of location.

It should be noted that through this document, the term "locations" will be used to refer to Internet websites, television channels, interactive television channels, enhanced television services, and other multimedia enhanced channels or sites which may be accessible to an end user by way of a set-top box, a computer or any other device which may be used to retrieve multimedia content or services.

### Summary of the Invention

The present invention provides methods, interfaces, and devices for navigating locations previously accessed by an end user device such as a set top box. A history menu with menu items is provided with the menu items referencing the last locations accessed by the end user device. The end user can therefore choose any one of the previously accessed locations and, upon activation of the menu items, the location referenced by the menu item is accessed. Each location accessed by the end user device creates or modifies a record that notes details relating to how that location is accessed. The mode of the end user device, the address or channel for the location, and any related or required software is noted in the record along with a short but useful description of the location. Each record is referenced by one of the menu items and, upon activation of the menu item, the record is retrieved. The end user device then uses the details in the record to access the desired location.

In a first aspect, the present invention provides a method of navigating locations previously accessed by an end user device which switches modes to access different locations, the method comprising the steps of :
a) providing a history menu containing menu items, at least one menu item being related to a location previously accessed by said end user device;
b) receiving an end user input selecting a selected menu item, said selected menu item being one of said at least one menu items relating to a location previously accessed by said end user device;
c) retrieving a record associated with said selected menu item, said record containing information related to said location; and
d) accessing said location using information related to said selected menu item.

In a second aspect, the present invention provides a graphical user interface for use in navigating locations previously accessed by an end user device which switches modes to access different locations, the user interface comprising:
- a history menu containing menu items, at least one menu item being related to a location previously accessed by said end user device.

In a third aspect, the present invention provides computer readable media having encoded thereon computer readable code implementing a method of navigating locations previously accessed by an end user device which switches modes to access different locations, the method comprising the steps of :
a) providing a history menu containing menu items, at least one menu item being related to a location previously accessed by said end user device;
b) receiving an end user input selecting a selected menu item, said selected menu item being one of said at least one menu items relating to a location previously accessed by said end user device;
c) retrieving a record associated with said selected menu item, said record containing information related to said location; and
d) accessing said location using information related to said selected menu item.

In a fourth aspect, the present invention provides a user interface for navigating locations previously accessed by an end user device which switches modes to access different locations, the user interface comprising:
- a first user activatable control for cycling through items in a log of previously accessed locations in a first direction;
- a second user activatable control for cycling through said items in said log in a second direction;
   wherein
   - said first and second controls interact with said end user device to access locations denoted by said items in said log when one of said first or second controls is activated.

### Brief Description of the Drawings

A better understanding of the invention will be obtained by considering the detailed description below, with reference to the following drawings in which:
Figure 1 is a representation of a history menu according to an embodiment of the invention;
Figure 2 is an illustration of a remote control device showing specific buttons which may be used to activate an embodiment of the invention;
Figures 3A-3D are representations of the relationship between menu items and record entries for various types of locations;
Figure 4 is a flowchart detailing the steps executed when a history menu is activated and utilized;
Figure 5 is a flowchart detailing the steps executed when the history menu and its associated record entries are populated; and
Figure 6 is a flowchart detailing the steps executed in an implementation which does not present a viewable history menu.

### Detailed Description

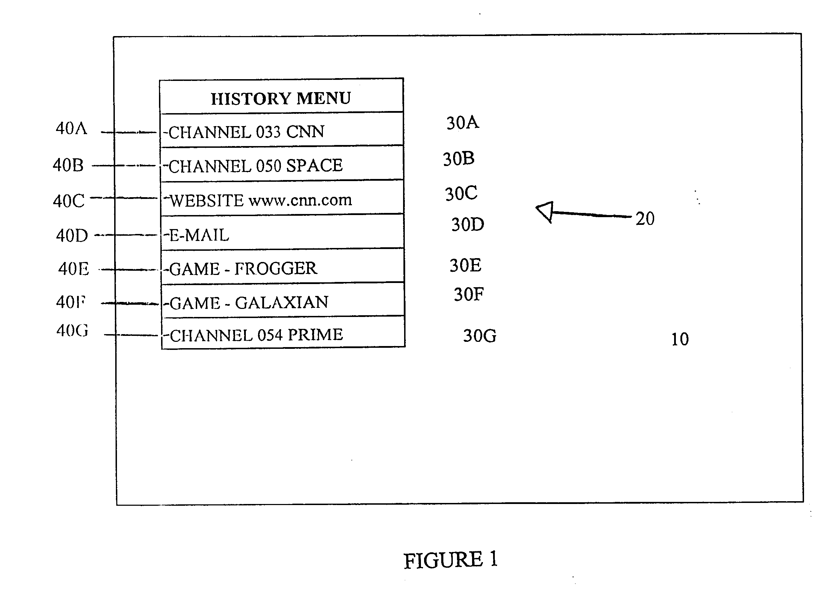

Referring to Figure 1, a television screen 10 is illustrated with a history menu 20. The menu 20 has menu items 30A-30G. Each menu item 30A-30G has identifying text 40A-40G which identifies a location associated with the relevant menu items. As can be seen from Figure 1, menu items 30A, 30B and 30G identify television channels, menu item 30C identifies a website, menu item 30D identifies an email application, and menu items 30E and 30F identify entertainment applications.

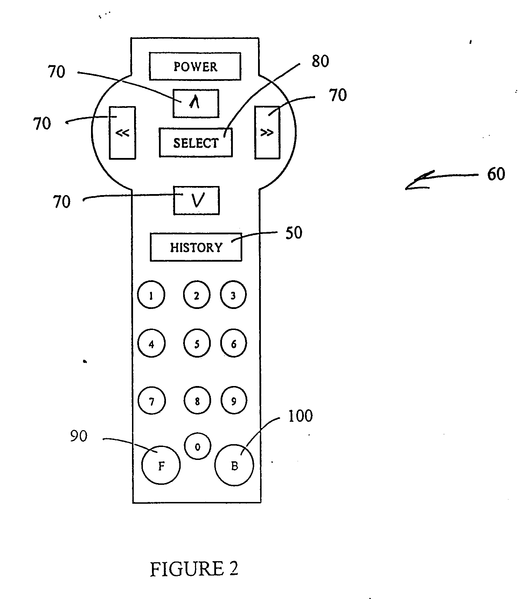

The history menu is toggled on and off by way of a dedicated key 50 on a remote control 60 for an end user device (See Figure 2). To navigate the history menu 20, arrow keys 70 on the remote control 60 are provided. Once an end user highlights a selected menu item, an activate or select key 80 on the remote control 60 will activate the selected item. To assist in the navigation of previously accessed locations, a FORWARD key 90 and a BACKWARD key 100 are also provided on the remote control 60. Activation of the FORWARD key 90 causes the end user device to move down the menu items 30A-30G in the history menu 20 from a given point in the menu 20. Similarly, activation of the BACKWARD key 100 causes the end user device to move up the menu items 30A-30G in the history menu 20 from a given point. Each activation of either the BACKWARD key 100 or the FORWARD key 90 causes activation of the next menu item in either the upward or the downward sequence. As known, the activation of any key in the remote control causes the control to communicate and interact with the end user device.

It should be noted that activation of any of the menu items 30A-30G, either by manually selecting the menu item or by automatic activation by any of the FORWARD or the BACKWARD keys 90, 100, initiates a specific sequence of events. Upon activation, a record entry associated with the specific selected menu item is retrieved. The information stored in the record entry is then read and, based on the information, the location pointed to by the information is accessed.

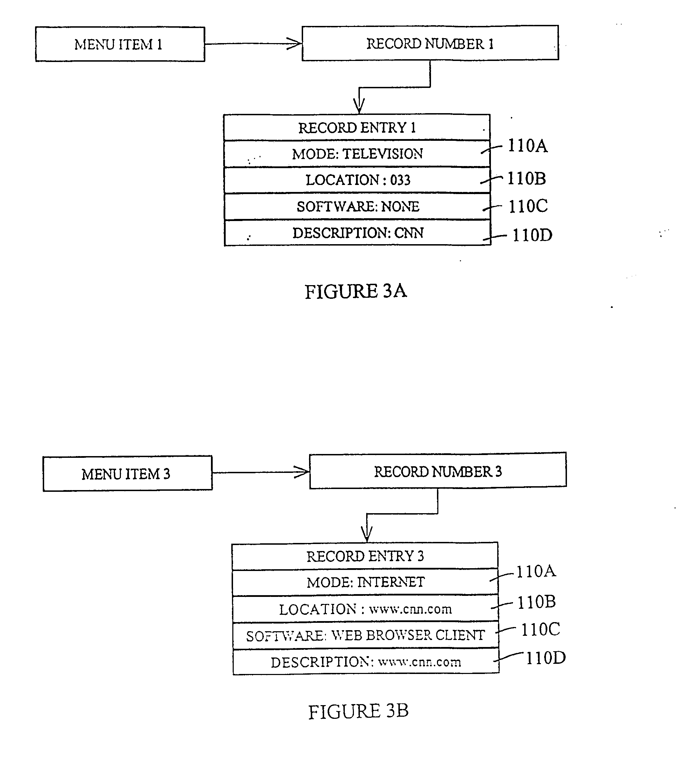

To clarify the above process, Figures 3A-3D are provided. Figures 3A-3D schematically illustrate the relationship between a menu item entry in the history menu 20 and the relevant record entries. Figures 3A illustrates that menu item 30A is associated with record number 1 and that this references record entry 1. As part of record entry 1, the mode required for the end user device to access the location is referenced in field 110A. For this entry, the mode required is a TV or television mode. Field 110B then recounts the location which was previously accessed since the mode for this entry is TV mode, then field 110B contains a television channel number. Field 110C contains the identification of any software required to access the location. For this entry, no specific software is required. The final field, field 110D, contains a description of the location referred to by field 110B. This description may be a channel or station identification, a website address, the name of a software application, or any text which may be used to identify the location. For ease of implementation, this field 110D may provide the text used as the text identification for the menu item entry in the history menu 20.

Referring to Figures 3B-3D, some of the possible configuration for the record entries are presented. Figure 3B shows a record entry for menu item 30C referencing a website (e.g. www.cnn.com). For this entry, the entry in field 110A notes that the end user device has to be in Internet mode to be able to access this location. Field 110B notes the website address for the location and field 110C notes that a web browser client software application must be launched to access the location. Clearly, once the software application is launched, the website address in field 110B is passed on to the application so that the location may be accessed. It should be noted that the web browser client application is ideally internal to the end user device and does not need to be downloaded.

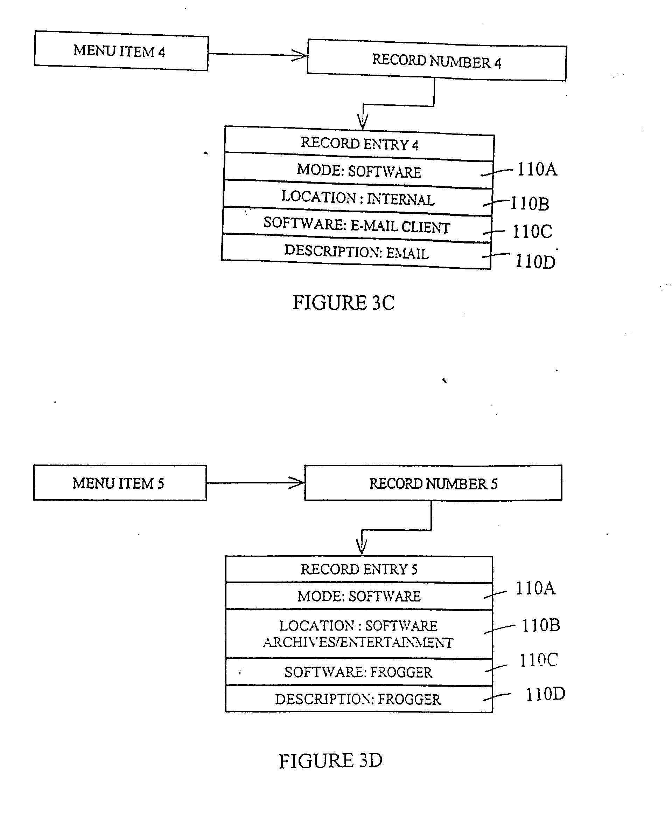

Figure 3C presents a record entry for a software application internal to the end user device but that does not need an external location address. As can be seen, a specific software mode is required as an entry in the mode field 110A. The software mode may be seen as a superset of the Internet mode given that the Internet mode is an application specific software mode that is specific to the web browser client application. The modes, however, may be left to the designers of the end user device for implementation. Returning to Figure 3C, the location referenced by the record entry is a location internal to the end user device - the end user device does not have to reference anything external to it to carry out the command (See field 110B). The software required to be launched (see field 110C) is an internal email client. This is described simply as "email" in the description field 110D. It should be noted that while the location in field 110B is labelled "internal" the software launched may still access external sites. For example, the email client may need to communicate with an external mail server to retrieve and/or deliver the mail. It should also be noted that the record entry in Figure 3C corresponds to the menu item 30D in history menu 20 in Figure 1.

Referring to Figure 3D, the record entry illustrated is for a software application located external to the end user device. Similar to the record entry in Figure 3C, field 110A notes that the end user device has to be in software mode to access the location. The location referred to in field 110B is a software repository external to the end user device. The relevant software application, as identified by the software field 110C, may therefore be downloaded as needed from the location referred to in field 110B. After the downloading process, the software application may then be launched accordingly. As can be seen from Figure 3D, the software application identified in field 110C and identified with the corresponding menu item 30E in history menu 20 in Figure 1, is the entertainment software entitled "Frogger". As noted above, when the menu item 30E is activated, the software application "Frogger" is downloaded from the location referred to in field 1110B and is launched accordingly.

To implement the history menu itself, a preconfigured number of menu items may be specified with a corresponding number of record entries being set aside for this purpose. A one-to-one correspondence between the number of menu items and the number of record entries is preferable to avoid confusion. Also, a preset number of slots in the history menu, corresponding to the number of menu items, may be provided for the user interface. In the beginning, when the end user device is initiated, all slots in the history menu are empty as no menu items are present. Every time the end user device accesses a location the next available slot in the history menu is taken by this location. The record entry associated with this slot is then populated with the required information automatically and, accordingly, a new menu item is inserted in the slot in the history menu. Thus, every time the end user devices manually launches the web browser client, the end user device waits for user input regarding the website address to be visited. This website address is then used to populate fields 110B and 110D in the relevant record entry. The user input, such as the channel to which the end user device is to be tuned, is therefore saved and used to populate the relevant fields in the record. It should be noted that, although a preconfigured number of menu items is easier to implement, a user configurable number of menu items is possible.

Since there are a finite number of slots in the history menu, the history menu can be implemented as a FIFO (first in first out) stack so that older record entries can be re-used. Thus, if all the slots are occupied and a new location is to be entered, the oldest menu item (corresponding to the first or earliest menu item to be added to the menu) is overwritten by the new location.

For a simpler implementation of the above invention, the actual history menu need not be presented to the end user. Instead, activation of either the FORWARD key 90 or the BACKWARD key 100 causes the cycling through of the items in the history menu. The FORWARD key 90 (first user activatable control) and the BACKWARD key 100 (second user activatable control) cause cycling through the items in different directions. Presentation of the actual history menu, while convenient, is not required as each activation of one of the keys 90 or 100 causes the retrieval of the next relevant menu item and the accessing of the relevant location denoted by the menu item. For such an implementation, the history menu is invisible or not viewable to the end user. The history menu effectively becomes a log or a record of locations visited and activation of either the FORWARD key 90 or the BACKWARD key 100 sequentially cycles through the log or record without showing the actual menu to the end user.

It should be noted that while the FORWARD and BACKWARD keys 90, 100 are shown as being implemented on a remote control, other implementations are possible. As an example, the keys may be located on the end user device itself or on some other console.

To further clarify the simpler implementation described above, a pointer may be used to denote the current location being accessed on the history menu. This pointer, not visible to the end user, keeps track of which slot in the history menu is being accessed. For greater simplicity, each menu item entry corresponding to a slot can be referenced by a menu item index number. These index numbers are fixed in that each index number specifically refers to a certain menu item entry. The pointer may be a computer memory location that holds the index number of the menu item entry containing the record entry of the location currently being accessed. Activation of the FORWARD key 90 increments the number in the pointer by 1 while activation of the BACKWARD key 100 decrements the number in the pointer by 1. Every time the pointer number changes, the end user device retrieves the index number in the pointer, references that index number to the menu item referred to by the index number, and then retrieves the relevant record entry. This record entry is then used to access the location detailed in the record entry fields. Using the above scheme, each activation of either of the keys 90 or 100 changes the location being accessed by the end user device without the need for presenting the actual menu to the end user. The above scheme allows the end user to sequentially move forward or backward through his or her location selections. To prevent "overflow" or having the pointer have index numbers which do not exist, a "wraparound" scheme can be used such that decrementing 1 by 1 results in the highest index number being placed in the pointer. Similarly, the incrementing of the number in the pointer past the highest index number results in "1" (or the highest index number) being entered in the pointer.

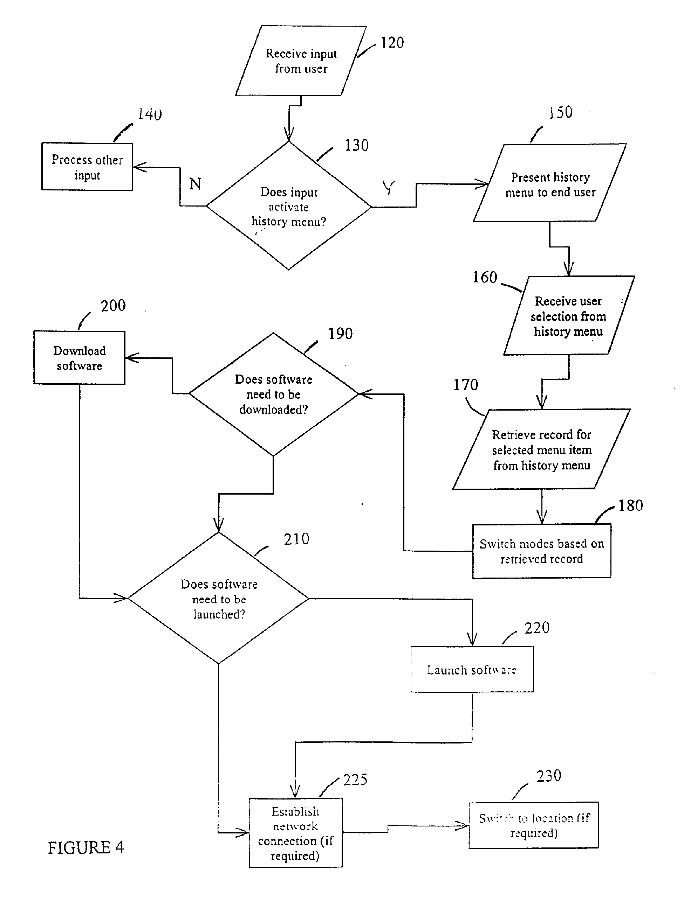

Referring to Figure 4, a flow chart detailing the steps executed by an end user device in implementing the invention is illustrated. The process begins with the end user device receiving an input from and end user (step 120). The end user device then determines if this user input activates the history menu (step 130). If the user input does not activate the history menu, then the input is processed accordingly (step 140). If, on the other hand, the input does activate the history menu, then the history menu is presented (step 150). This may be done by overlaying the history menu on whatever video is being played on the screen. Once the history menu is presented to the end user, the end user device then receives an end user selection from the history menu (step 160). This input usually highlights then activates one of the menu items in the history menu. Once one of the menu items is activated, the record entry associated with that menu item is then retrieved (step 170). Based on the information in the record entry, the current mode of the end user device is, if required, switched to a mode suitable for accessing the location referred to in the record entry (step 180). As an example, if the end user device is in television mode and an Internet website is to be accessed, then the end user device needs to switch to an Internet-ready mode. A decision (step 190) is then made based on the information in the record entry. If software needs to be downloaded, then the location where the software is archived is inserted and, after establishing a network connection, the relevant software is downloaded (step 200). Then, regardless of whether the relevant software had to be downloaded, another decision (step 210) determines if the software has to be launched. If the relevant software needs launching, then the software is initiated and launched (step 220). Afterwards, whether the software needed launching or not, a network connection is established if required (step 225) and the location referred to in the record entry is accessed (step 230). As noted above, some menu items may only require the downloading and/or the launching of software and not an actual access to a location such as a website or a television channel.

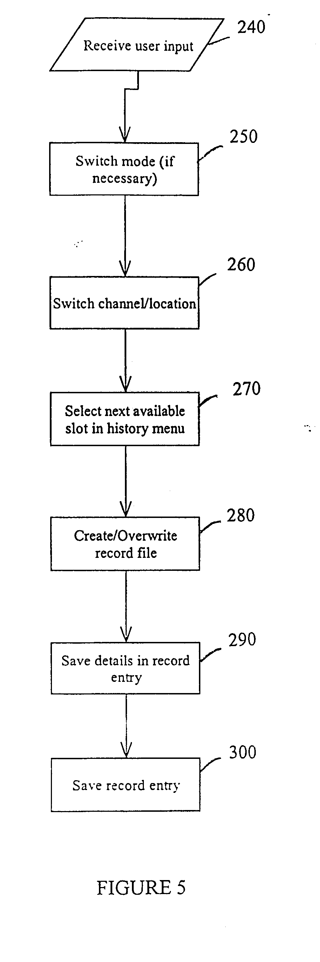

To populate the history menu, Figure 5 presents a flowchart detailing the steps executed when an end user manually switches or changes locations. The steps detail what is done when a location is added to the history menu. The process starts with receiving a user input (step 240). If required, the current mode of the end user device is switched to that required to access the location (step 250). The new location is then accessed by switching channels, websites, or applications (step 260). Once the new location has been accessed, the end user device automatically populates the history menu. In step 270, the next available slot in the history menu is selected. This slot may be the next one in the sequence or, if the history menu is full, the earliest populated slot is chosen as per the workings of a FIFO stack. A record entry associated with the selected menu item is then created using the information for the new location or as the old record entry is overwritten (step 280). The details for the new location is then stored in the record entry (step 290) and the record entry is saved in the end user device (step 300).

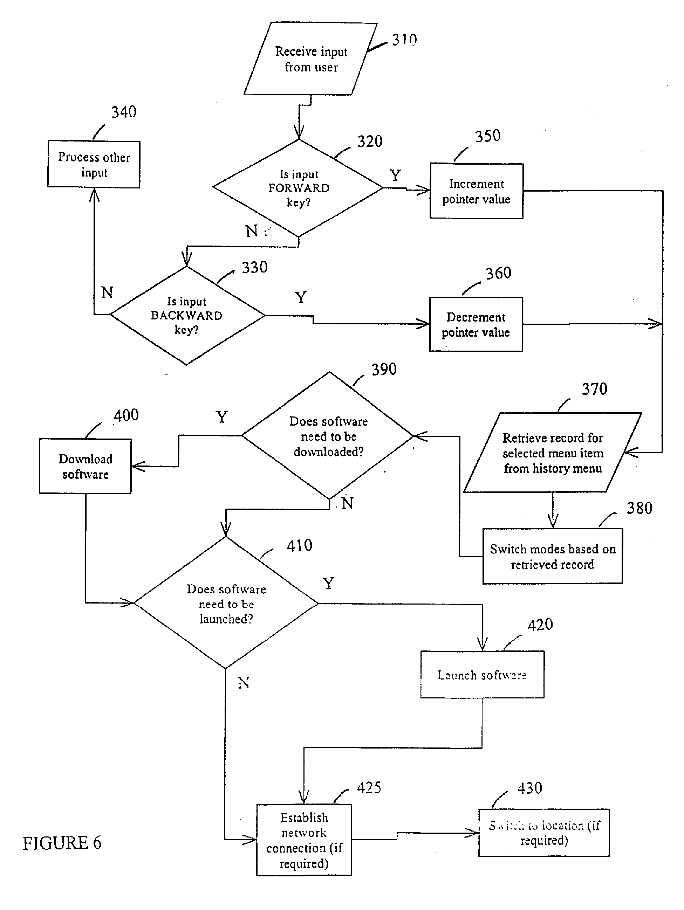

To implement the simpler implementation detailed above that uses only the BACKWARD and FORWARD keys, the steps to be executed are illustrated in the flowchart of Figure 6. This process begins with step 310, that of receiving input from the end user. Steps 320 and 330 then check if the input is either the FORWARD or the BACKWARD keys. If the input is neither of these keys, then the input is processed accordingly (step 340). If, on the other hand, the input is the FORWARD key, then the value in the pointer is incremented (step 350), thereby moving "up" the history menu. This accesses the next sequential location in the menu. Alternatively, if the input is the BACKWARD key, then the value in the pointer is decremented (step 360) thereby moving "down" the history menu. This accesses the immediately preceding sequential location in the menu.

Once the proper location in the menu is found (by either adding or subtracting to the pointer value), the record associated with that menu item is retrieved (step 370). Based on the information in the record entry, the current mode of the user device is, if required, switched to a mode suitable for accessing the location referred to in the record entry (step 380). A decision (step 390) then determines if the location referred to in the record entry requires extra software. If extra software is required, then this software is downloaded (step 400) after a network connection is established (if required).

Regardless of whether extra software had to be downloaded, step 410 determines if software needs to be launched. If required, then the software is launched (step 420). Even if software did not need to be launched, the next step is that of establishing a network connection if required (step 425). This may be required for Internet based applications such as web browsing or online games. Finally, the location referred to in the record entry is accessed (step 430).

It should be noted that other types of software, other than entertainment software, may be used with the invention. Productivity software such as personal information managers and others may be downloaded and launched. Alternatively, these applications may be resident in the end user device, thereby obviating the need for patience trying downloads.

Also, it should be further noted that, while the above explanation focusses on the application of the invention to a set top box implementation, other types of end user devices may be used. The invention is particularly applicable to end user devices which require mode switching to access different location types. As such, mobile telephones, especially those with Internet capabilities, and personal digital assistants (PDAs) may also use the invention.

Embodiments of the invention may be implemented in any conventional computer programming language. For example, preferred embodiments may be implemented in a procedural programming language (e.g. "C") or an object oriented language (e.g. "C++"). Alternative embodiments of the invention may be implemented as pre-programmed hardware elements, other related components, or as a combination of hardware and software components.

Embodiments can be implemented as a computer program product for use with a computer system. Such implementation may include a series of computer instructions fixed either on a tangible medium, such as a computer readable medium (e.g., a diskette, CD-ROM, ROM, or fixed disk) or transmittable to a computer system, via a modem or other interface device, such as a communications adapter connected to a network over a medium. The medium may be either a tangible medium (e.g., optical or electrical communications lines) or a medium implemented with wireless techniques (e.g., microwave, infrared or other transmission techniques). The series of computer instructions embodies all or part of the functionality previously described herein. Those skilled in the art should appreciate that such computer instructions can be written in a number of programming languages for use with many computer or electronic system architectures or operating systems. Furthermore, such instructions may be stored in any memory device, such as semiconductor, magnetic, optical or other memory devices, and may be transmitted using any communications technology, such as optical, infrared, microwave, or other transmission technologies. It is expected that such a computer program product may be distributed as a removable medium with accompanying printed or electronic documentation (e.g., shrink wrapped software), preloaded with a computer system (e.g., on system ROM or fixed disk), or distributed from a server over the network (e.g., the Internet or World Wide Web). Of course, some embodiments of the invention may be implemented as a combination of both software (e.g., a computer program product) and hardware. Still other embodiments of the invention may be implemented as entirely hardware, or entirely software (e.g., a computer program product).

Although various exemplary embodiments of the invention have been disclosed, it should be apparent to those skilled in the art that various changes and modifications can be made which will achieve some of the advantages of the invention without departing from the true scope of the invention.

A person understanding this invention may now conceive of alternative structures and embodiments or variations of the above all of which are intended to fall within the scope of the invention as defined in the claims that follow.

## Claims

1. A method of navigating locations previously accessed by an end user device which switches modes to access different locations, the method comprising the steps of :
a) providing a history menu containing menu items, at least one menu item being related to a location previously accessed by said end user device;
b) receiving an end user input selecting a selected menu item, said selected menu item being one of said at least one menu items relating to a location previously accessed by said end user device;
c) retrieving a record associated with said selected menu item, said record containing information related to said location; and
d) accessing said location using information related to said selected menu item.

2. A method according to claim 1 further including a step of switching a current mode of said end user device to a mode suitable for accessing said location

3. A method according to claim 2 wherein said step of switching is accomplished based on said information.

4. A method according to claim 1 wherein step d) further comprises the step of :
- launching a software application suitable for use in accessing said location

5. A method according to claim 4 wherein step d) further comprises the steps of:
- establishing a network connection to said location
- retrieving content from said location.

6. A method according to claim 4 wherein said software application is chosen from a group comprising:
- a web browser
- an email client
- entertainment software
- a personal information manager

7. A method according to claim 1 wherein said end user device is chosen from a group comprising:
- a mobile telephone
- a set top box (STB)
- a personal digital assistant (PDA)

8. A method according to claim 1 wherein step d) further comprises the steps of:
- retrieving channel information denoting said location
- tuning said end user device to a channel referenced by said channel information

9. A method according to claim 8 wherein said location is said channel referenced by said channel information.

10. A method according to claim 8 wherein said channel is a television channel.

11. A method according to claim 8 wherein said channel provides information relating to a schedule of programs.

12. A method according to claim 1 wherein said history menu is not viewable by an end user.

13. A method according to claim 1 wherein said history menu has sequential menu items each relating to locations previously accessed by said end user device.

14. A method according to claim 13 wherein said history menu is a log of previously accessed locations.

15. A method according to claim 14 wherein said end user input selects an immediately preceding item from said log.

16. A method according to claim 13 wherein said end user input selects an immediately succeeding item from said log.

17. A graphical user interface for use in navigating locations previously accessed by an end user device which switches modes to access different locations, the user interface comprising:
- a history menu containing menu items, at least one menu item being related to a location previously accessed by said end user device.

18. A user interface according to claim 17 wherein said history menu is only visible to an end user when said history menu is specifically activated by said end user.

19. A user interface according to claim 17 wherein the or each of said at least one menu item is described by text presented to an end user through said history menu.

20. A user interface according to claim 17 wherein at least one of said at least one menu item identifies a television channel.

21. A user interface according to claim 17 wherein at least one of said at least one menu item identifies a website address.

22. A user interface according to claim 17 wherein at least one of said at least one menu item identifies a specific software application.

23. A user interface according to claim 17 wherein activation of one of said at least one menu item executes a method for accessing said location, said method comprising the steps of:
a) switching a current mode of said end user device to a mode suitable for accessing said location
b) accessing said location using information related to said one of said at least one menu item.

24. A user interface according to claim 23 wherein step b) further comprises the step of :
- launching a software application suitable for use in accessing said location

25. A user interface according to claim 23 wherein step b) further comprises the steps of:
- establishing a network connection to said location
- retrieving content from said location.

26. A user interface according to claim 24 wherein said software application is chosen from a group comprising:
- a web browser
- an email client
- entertainment software
- a personal information manager

27. A user interface according to claim 23 wherein said method includes the step of retrieving a record associated with an activated menu item.

28. Computer readable media having encoded thereon computer readable code implementing a method of navigating locations previously accessed by an end user device which switches modes to access different locations, the method comprising the steps of :
a) providing a history menu containing menu items, at least one menu item being related to a location previously accessed by said end user device;
b) receiving an end user input selecting a selected menu item, said selected menu item being one of said at least one menu items relating to a location previously accessed by said end user device;
c) retrieving a record associated with said selected menu item, said record containing information related to said location; and
d) accessing said location using information related to said selected menu item.

29. Computer readable media according to claim 28 wherein said method further includes a step of switching a current mode of said end user device to a mode suitable for accessing said location.

30. Computer readable media according to claim 29 wherein said step of switching is accomplished based on said information.

31. Computer readable media according to claim 28 wherein step d) further comprises the step of :
- launching a software application suitable for use in accessing said location

32. Computer readable media according to claim 31 wherein step d) further comprises the steps of:
- establishing a network connection to said location; and
- retrieving content from said location.

33. Computer readable media according to claim 28 wherein said history menu has sequential menu items each relating to locations previously accessed by said end user device.

34. Computer readable media according to claim 33 wherein said history menu is a log of previously accessed locations.

35. Computer readable media according to claim 33 said end user input selects an immediately preceding item from said log.

36. Computer readable media according to claim 33 wherein said end user input selects an immediately succeeding item from said log.

37. A user interface for navigating locations previously accessed by an end user device which switches modes to access different locations, the user interface comprising:
- a first user activatable control for cycling through items in a log of previously accessed locations in a first direction;
- a second user activatable control for cycling through said items in said log in a second direction;
wherein
- said first and second controls interact with said end user device to access locations denoted by said items in said log when one of said first or second controls is activated.

38. A user interface according to claim 37 wherein at least one of said items in said log identifies a television address.

39. A user interface according to claim 37 wherein at least one of said items in said log identifies a website address.

40. A user interface according to claim 37 wherein at least one of said items in said log identifies a specific software applications.

41. A user interface according to claim 37 wherein activation of either one of said controls executes a method comprising:
a) retrieving a record associated with a selected item from said log, said record containing information relating to a location previously accessed by said end user device;
b) switching a current mode of said end user device to a mode suitable for accessing said location; and
c) accessing said location using information.
